# EUROPÄISCHE PATENTSCHRIFT

(11) **EP 0 413 710 B1**
(45) Veröffentlichungstag und Bekanntmachung des Hinweises auf die Patenterteilung: **07.07.1993**
(21) Anmeldenummer: 89904776.5
(22) Anmeldetag: 25.04.1989
(51) Int. Cl.: F16L 55/16

(54) **VORRICHTUNG ZUM ABDICHTEN SCHADHAFTER WÄNDE VON BEHÄLTERN ODER ROHREN**
DEVICE FOR SEALING DAMAGED WALLS OF CONTAINERS OR TUBES
DISPOSITIF POUR ETANCHEIFIER DES PAROIS ENDOMMAGEES DE RECIPIENTS OU DE TUBES

(30) Priorität: 14.05.1988 DE 3816573
(43) Veröffentlichungstag der Anmeldung: 27.02.1991
(73) Patentinhaber: VEPRO GmbH, D-53909 Zülpich (DE)
(72) Erfinder: Vetter, Manfred, D-5352 Zülpich (DE)
(74) Vertreter: Bauer, Wulf, Dr.
(86) Internationale Anmeldenummer: DE8900264
(87) Internationale Veröffentlichungsnummer: WO8911061

(56) Entgegenhaltungen:
- DE-A- 2 745 506
- DE-C- 689 784
- US-A- 3 480 043
- US-A- 3 496 963

## Beschreibung

Die Erfindung bezieht sich auf eine Vorrichtung zum Abdichten schadhafter, eine Leckstelle aufweisender Wände von Behältern oder Rohren, mit einem die Leckstelle überdeckenden, aufblasbaren Leckdichtkissen, das eine flexible Gegenplatte, die an gegenüberliegenden Randbereichen Befestigungsteile für eine den Behälter bzw. das Rohr umgreifende Spanneinrichtung hat und einen an der leckzugewandten Seite dieser flexiblen Gegenplatte befindlichen und mit ihr verbundenen, aufblasbaren Innenraum aufweist, der über einen Nippel von außen zugänglich ist und von mindestens einer Wand aus einem gummiartigen, armierten Material begrenzt wird.

Diese Vorrichtung, im folgenden Leckdichtvorrichtung genannt, ist aus der deutschen Patentschrift 27 45 506 bekannt. Bei ihr hat die Gegenplatte vorzugsweise die Form eines Rechtecks, an dessen Schmalseiten Metallstäbe eingelegt sind, die von einer in Richtung der Längsseite verlaufenden Armierung umschlungen werden. An diesen Metallstäben greifen die Befestigungsteile der Spann- und Befestigungsvorrichtung an.

Beim praktischen Einsatz wird das Leckdichtkissen mittels der Spann-und Befestigungsvorrichtung über die Leckstelle gespannt und festgezurrt, anschließend wird der Innenraum des Leckdichtkissens mit Druckluft, alternativ aber auch mit einer Flüssigkeit unter Druck, gefüllt. Dadurch erhält das Leckdichtkissen ein größeres Volumen, es preßt sich mit seinem unteren Rand um den die Leckstelle begrenzenden Teil der schadhaften Wand und spannt gleichzeitig die Gurte oder Seile der Spann- und Befestigungsvorrichtung. Durch das Aufblasen wird eine dichtende Anlage des Rohrdichtkissens an den Wandbereich rings um die Leckstelle erreicht, so daß die Leckstelle abgedichtet ist. Auf diese Weise kann das Auflaufen gefährlicher Stoffe aus schadhaft gewordenen Behältern oder Rohren in relativ kurzer Zeit gestoppt werden. Folgeschäden - insbesondere Umweltverschmutzungen oder Explosionen - können auf diese Weise vermieden werden.

Weiterhin ist aus der US-PS 34 96 963 eine Abdichtvorrichtung für Rohre bekannt, bei der das die Leckstelle überdeckende, aufblasbare Kissen außenseitig von einem als klappbare Schelle ausgebildeten Gegenstück übergriffen wird. Diese Schelle hat eine Spannvorrichtung mit einem schwenkbar gelagerten Schraubbolzen. Durch Anziehen der zugehörigen Mutter kann die Schelle gespannt werden, wodurch die Vorrichtung am Rohr festliegt. Das aufblasbare Kissen ist fest mit dem Gegenstück verbunden. Diese Vorrichtung eignet sich im wesentlich nur für zylindrische Körper und nur für einen vorgegebenen Durchmesserbereich, für allgemeine Behälterformen, beispielsweise LKW-Tankbehälter, ist sie nicht geeignet.

Nachteilig bei den vorbekannten Leckdichtvorrichtungen ist insbesondere, daß sie lediglich zum Abdichten eines Lecks dienen, nicht aber ein Absaugen, Abpumpen oder Entfernen der an der Leckstelle befindlichen Flüssigkeit (oder des Gases) ermöglichen. Dies ist aber gerade bei Verkehrsunfällen mit Tanklastwagen häufig notwendig. Ein umgestürzter Tanklastwagen liegt meist so oder ist durch andere Gegenstände, beispielsweise andere Unfallfahrzeuge oder Brücken, Erdwälle oder Hauswände so blockiert, daß der Zugang zum eigentlichen Tankstutzen nicht frei ist. Es ist dann schwierig, manchmal sogar mit den vorhandenen Mitteln nicht möglich, den durch die Leckdichtvorrichtung abgedichteten Tank zu entleeren. Hierdurch können aber die weiteren Rettungsarbeiten behindert und teilweise erheblich verzögert werden, beispielsweise wenn sich im Transporttank des Unfallfahrzeugs eine gefährliche, beispielsweise explosive Flüssigkeit befindet. Die hier geschilderten Probleme treten beispielsweise bei Verkehrsunfällen mit Tankfahrzeugen auf, die Benzin geladen haben.

Hier setzt nun die Erfindung ein. Sie hat es sich zur Aufgabe gemacht, das vorbekannte Leckdichtkissen der eingangs genannten Art dahingehend weiterzuentwickeln, daß nach wie vor eine dichte Anlage des Kissens rings um die Leckstelle erzielt wird, dennoch aber durch das Leckdichtkissen hindurch eine Flüssigkeit oder ein Gas kontrolliert abgesaugt bzw. abgeleitet werden kann.

Diese Aufgabe wird ausgehend von der Leckdichtvorrichtung der eingangs genannten Art dadurch gelöst, daß der Innenraum ringförmig ausgebildet ist und zusammen mit der flexiblen Gegenplatte eine die Leckstelle übergreifende Mulde begrenzt, und daß ein Durchlaß vorgesehen ist, der den Innenraum dieser Mulde mit der Außenseite des Leckdichtkissens verbindet.

Im Gegensatz zu dem vorbekannten Leckdichtkissen der eingangs genannten Art überdeckt dieses Leckdichtkissen nicht vollflächig die Leckstelle und die die Leckstelle umgebenden Bereiche der schadhaften Wand, sondern liegt lediglich außerhalb der Leckstelle und ringförmig um diese herum an der schadhaften Wand an. Dadurch wird bei dem an einer schadhaften Wand anliegenden Leckdichtkissen ein Hohlraum zwischen der schadhaften Wand und dem Leckdichtkissen geschaffen, wie er bei dem vorbekannten Leckdichtkissen aufgrund dessen vollflächiger Anlage nicht auftreten konnte. Anders ausgedrückt liegt das erfindungsgemäße Leckdichtkissen also wie eine Glocke um die Leckstelle. Es bildet die Mulde aus, die von aus dem Leck strömender Flüssigkeit gefüllt wird. Die Mulde ist dadurch ein Sammelbecken für ausgetretene Flüssigkeit, durch den erfindungsgemäß vorgesehenen Durchlaß kann die in der Mulde angesammelte Flüssigkeit entnommen werden.

Die durch den ringförmigen Innenraum bewirkte ringförmige (und nicht mehr vollflächige) Anlage des Leckdichtkissens rund um die Leckstelle bewirkt zudem, daß das Leckdichtkissen durch scharfkantige Stellen, die den Rand der Leckstelle bilden, nicht verletzt werden kann. Insgesamt läßt sich die erfindungsgemäße Leckdichtvorrichtung für alle diejenigen Anwendungsfälle einsetzen, für die auch die Leckdichtvorrichtung der eingangs genannten Art einsetzbar ist. Sie kann einfach und möglichst vielseitig - und dies auch bei sehr engen örtlichen Gegebenheiten - angebracht und platzsparend sowie problemlos verstaut werden. Gegenüber der vorbekannten Leckdichtvorrichtung hat sie aber den zusätzlichen Vorteil, daß sie nicht oder weniger am Randbereich des Lecks aufliegt und insbesondere daß durch sie hindurch Flüssigkeit bzw. Gas abgeleitet werden kann.

Unter "ringförmig" wird nicht nur eine Kreisringform verstanden, sondern jeder beliebig geformte Ring, insbesondere ein Ovalring, rechteckförmiger Ring usw. Die Größe des Leckdichtkissens wird - und hier besteht kein Unterschied zum bekannten Leckdichtkissen - der Größe der typischerweise anfallenden Lecks angepaßt. Für die Praxis haben sich länglich-rechteckförmige Leckdichtkissen mit den Abmessungen 30 x 60 cm als geeignet und praktisch erwiesen. Der Innenraum ist durch die Armierung seiner Wand so druckfest, daß er bei dem angegebenen Maximaldruck auch dann nicht bersten kann, wenn das Leckdichtkissen frei und ohne Verspannung an einer Wand aufgeblasen wird. Die flexible Gegenplatte paßt sich weitgehend der Krümmung der schadhaften Wand an, die Spannvorrichtungen ermöglichen eine Befestigung auch an Außenecken von Behältern und sichern das Leckdichtkissen bei richtiger Anordnung gegen ein seitliches Verschieben von der Leckstelle weg.

Für das erfindungsgemäße Leckdichtkissen werden zwei grundsätzlich unterschiedliche Konstruktionen vorgeschlagen: In der ersten Ausführung besteht das Leckdichtkissen aus der flexiblen Gegenplatte und einem mit dieser dicht verbundenen, aufblasbaren Ring aus armiertem Gummimaterial, der beispielsweise die Form eines Autoreifens hat, vorzugsweise aber rechteckförmig bzw. oval ausgebildet ist. In der anderen Ausführung wird das Leckdichtkissen aus bandförmigem, armiertem Gummimaterial aufgebaut. Das Leckdichtkissen besteht im wesentlichen aus zwei Wänden, einer leckabgewandten Kissenwand und einer leckseitigen Kissenwand, die einstückig zusammenhängen oder separat zugeschnitten sein können, wobei bei separatem Zuschnitt beide Kissenwände in unterschiedlichen Richtungen armiert sein können, damit die leckzugewandte Kissenwand sich stärker ausdehnen kann als die leckabgewandte Kissenwand. Die beiden Kissenwände sind nicht nur randseitig, sondern auch in ihrem Mittelbereich, wo die Mulde ausgebildet wird, miteinander verbunden. Im aufgeblasenen Zustand bilden sie daher einen Körper ähnlich einem aufgeblasenen Schlauchboot. Dabei ist es vorteilhaft, auf der leckseitigen Kissenwand im Bereich des aufblasbaren Innenraumes eine ringförmig umlaufende Dichtung zu befestigen, beispielsweise einen Dichtvorsprung aus Gummimaterial, eine oder mehrere Dichtlippen usw. Durch sie werden Undichtigkeiten zwischen dem Leckdichtkissen und der schadhaften Wand vermieden. Diese Undichtigkeiten entstehen dadurch, daß das Leckdichtkissen beim Aufblasen steifer wird und eine eigene Form annimmt, also nicht mehr so flexibel ist, wie im nicht aufgeblasenen Zustand.

Gegenüber mit Unterdruck arbeitenden Saugglocken, die auf Leckstellen schadhafter Behälter oder Rohre aufgesetzt werden, hat das erfindungsgemäße Leckdichtkissen den Vorteil höherer Anpreßkräfte und eines geschlossenen Innenraumes. Die höheren Anpreßkräfte werden durch Fülldrucke, die ein mehrfaches des Atmosphärendruckes betragen, beispielsweise sechs bar, erreicht.

Weitere Vorteile und Merkmale der Erfindung ergeben sich aus den übrigen Ansprüchen sowie der nun folgenden Beschreibung von drei nicht einschränkend zu verstehenden Ausführungsbeispielen der Erfindung, die unter Bezugnahme auf die Zeichnung im folgenden näher beschrieben werden. In der Zeichnung zeigen:
- Fig. 1: eine perspektivische Darstellung eines Leckdichtkissens mit einem ringförmigen, schlauchähnlichen Innenraum im aufgeblasenen Zustand und einer mit dem Mantel des Innenraums dicht verbundenen, flexiblen Gegenplatte,
- Fig. 2: ein Schnittbild (in verändertem Maßstab) entlang der Schnittlinie II-II in Figur 1,
- Fig. 3: eine perspektivische Darstellung eines aus armiertem Bahnmaterial hergestellten Leckdichtkissens im nicht aufgeblasenen Zustand mit einem Dichtvorsprung,
- Fig. 4: ein Schnitt entlang der Schnittlinie IV-IV in Figur 3, jedoch im aufgeblasenen Zustand und
- Fig. 5: ein Schnittbild entsprechend Figur 2 oder 4 durch ein drittes Ausführungsbeispiel der Erfindung mit zwei ringförmig umlaufenden Dichtlippen.

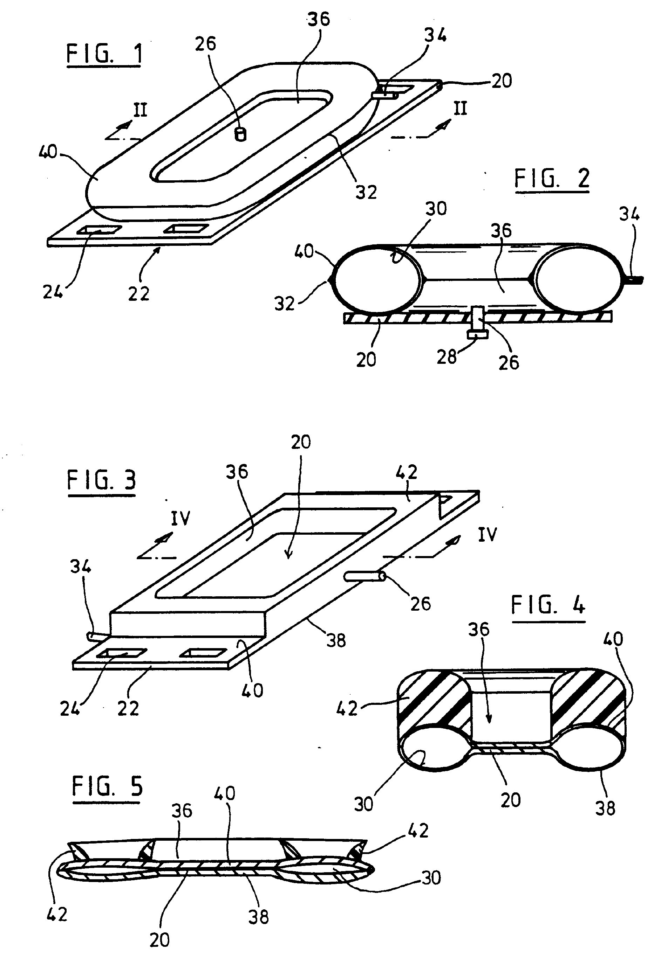

Das Leckdichtkissen nach dem ersten Ausführungsbeispiel (Figuren 1 und 2) hat eine flexible Gegenplatte 20 in Rechteckform, die Länge beträgt sechzig Zentimeter, die Breite dreißig Zentimeter, die Dicke fünfzehn Millimeter. Sie ist aus armiertem, insbesondere stahlcordarmiertem Gummimaterial hergestellt und hat an gegenüberliegenden Randbereichen, die hier Schmalseiten 22 sind, in Richtung der Schmalseiten verlaufende, durchgehende Schlitze 24, durch die Spanngurte, die ähnliche Abmessungen haben wie Sicherheitsgurte von Kraftfahrzeugen, gesteckt werden können. Schließlich ist in der Gegenplatte 20 ein Durchlaß 26 vorgesehen, der durch die Gegenplatte 20 hindurchreicht und an der leckabgewandten Seite, in den beiden Figuren jeweils unten, ein Kupplungsstück 28 für das Ansetzen eines Schlauches oder Ventils hat. Der Durchlaß selbst ist ein Rohr mit einem lichten Innendurchmesser von fünfundzwanzig Millimetern, dieses Rohr ist als Metallrohr ausgeführt und so drucksteif, daß es auch im aufgeblasenen Zustand und praktischen Einsatz des Kissens nicht zugequetscht werden kann.

Auf der leckzugewandten Hauptfläche der Gegenplatte 20 ist ein schlauchartiger Körper dicht befestigt, der einen ringförmigen Innenraum 30 begrenzt. Die Wand ist aus einem gummiartigen, armierten Material gefertigt, im gezeigten Ausführungsbeispiel aus zwei ringförmigen Zuschnitten, die im Bereich einer parallel zur Gegenplatte 20 verlaufenden Ebene miteinander verbunden sind (Naht 32). Eine nahtlose Ausbildung ist ebenfalls möglich.

Der Innenraum 30 ist über einen Nippel 34 in Form eines Rohrstücks zugänglich. Er verläuft parallel zur Ebene der Gegenplatte 20, was bei örtlich eng begrenzten Einsätzen und auch beim Verstauen des Leckdichtkissens Vorteile hat. Der Nippel 34 ist in einem Eckbereich des Innenraums 30 angeordnet. Die Breitenabmessung des Innenraums 30 entspricht der Breitenabmessung der Gegenplatte 20, in Längsrichtung ist der Innenraum 30 etwas kürzer als die Gegenplatte, damit die insgesamt vier Schlitze 24 frei zugänglich bleiben.

Der innerhalb der Wand des Innenraums 30 freibleibende Teilbereich der Gegenplatte 20, in dem sich auch der Durchlaß 26 befindet und die nach innen weisenden Teilbereiche der Wandung des Innenraums 30 begrenzen eine Mulde 36, unterhalb der sich im praktischen Einsatz die (nicht dargestellte) Leckstelle einer ebenfalls nicht dargestellten schadhaften Wand befindet.

Das Leckdichtkissen nach dem Ausführungsbeispiel gemäß den Figuren 3 und 4 ist aus in einer Presse heißvulkanisiertem, armiertem, bahnförmigem, vor dem Vulkanisieren unvulkanisiertem Gummimaterial in einem einzigen Produktionsschritt hergestellt. Die flexible Gegenplatte 20 wird bei diesem Leckdichtkissen im wesentlichen durch eine leckabgewandte Kissenwand 38, teilweise aber auch durch eine leckseitige Kissenwand 40 gebildet. Diese beidem Wände, die gleich große Rechteckabmessungen aufweisen, sind nicht nur entlang ihrer Rechteckseiten und damit randseitig, sondern auch im Bereich eines mittigen Rechtecks miteinander verbunden. Dadurch begrenzen die beiden Kissenwände 38, 40 den wiederum ringförmigen, schlauchartigen Innenraum 30, wozu auf Figur 4 verwiesen wird. Dieser Innenraum 30 ist über einen Nippel 34 in an sich bekannter Weise zugänglich, auch dieser befindet sich in einem Eckbereich und verläuft parallel zur Ebene der Wände 38, 40.

Auf die leckseitige, in den Figuren 3 und 4 obere Kissenwand 40 und nur im Bereich oberhalb des Innenraums 30 ist ein Dichtvorsprung 42 dicht auf die Kissenwand 40 aufgesetzt und mit dieser verbunden. Er hat im gezeigten Ausführungsbeispiel im wesentlichen die Form eines rechteckförmigen Rahmens, dessen Länge etwas kürzer ist als die Länge der beiden Kissenwände 38, 40 und dessen Breite mit der Breite der beiden Kissenwände 38, 40 übereinstimmt. Er hat eine rechteckförmige Ausnehmung, die so bemessen ist, daß seine Breite bei etwa acht Zentimetern, in einem anderen Ausführungsbeispiel bei vier Zentimetern liegt. Seine Dicke liegt bei etwa vier Zentimetern. Diesen rahmenförmigen Dichtvorsprung 42 kann man dadurch herstellen, daß man eine vier Zentimeter starke Platte aus einem unarmierten Gummimaterial, beispielsweise aus Recyclingummi, in die angegebene Rechteckabmessung zuschneidet und inseitig wiederum ein Rechteck so herausschneidet, daß eine Rahmenbreite in den gegebenen Abmessungen verbleibt.

Durch eine Längswand des rahmenförmigen Dichtvorsprungs 42 ist der Durchlaß 26 geführt, er ist ebenfalls als druckfestes Rohr ausgebildet und verläuft parallel zur Ebene der Wände 38, 40. Dies ist bei platzmäßig begrenzten Einsätzen vorteilhafter als die quer zur Gegenplatte 20 verlaufende Anordnung gemäß dem ersten Ausführungsbeispiel.

Im Ausführungsbeispiel nach den Figuren 3 und 4 wird die Mulde 36 begrenzt durch die leckseitige Kissenwand 40 und zwar durch die Fläche, in der die beiden Kissenwände 38, 40 in ihrem Mittelbereich miteinander verbunden sind und durch die Innenfläche des Dichtvorsprungs 42.

Die beiden Kissenwände 38 sind in der Nähe ihrer Schmalseiten flächig miteinander verbunden, hier sind wiederum pro Schmalseite zwei Schlitze 24 vorgesehen.

Die leckabgewandte Kissenwand ist in Längsrichtung armiert, dies erfolgt z. B. durch Stahlcordfäden, die um die Ränder, insbesondere die Außenränder der Schlitze 24 geführt sind. Zwischen den Außenrändern und der Schmalseite kann zur Armierung ein Längselement, z. B. ein Metallstab, eingelegt werden, der von den Armierungsfäden umschlungen wird. Die leckseitige Kissenwand 40 ist diagonal armiert, so daß sie sich stärker ausdehnen kann als die leckabgewandte Kissenwand 38. Anstelle von Stahlcordfäden können auch Aramid oder entsprechend reißfeste Materialien zur Armierung eingesetzt werden.

In einer geänderten Ausbildung ist es möglich, den Zuschnitt für die leckseitige Kissenwand ebenfalls rahmenförmig zu machen, so daß die Mulde 36 zur leckabgewandten Seite lediglich durch die Kissenwand 38 begrenzt wird. Die gezeigte Ausbildung einer Verbindung beider Kissenwände 38, 40 in ihrem Mittelbereich hat aber den Vorteil, daß dort keine Dichtigkeitsprobleme auftreten, weil keine abdichtende Verbindung notwendig ist.

Das dritte Ausführungsbeispiel, das schnittbildlich in Figur 5 dargestellt ist, ist ebenfalls aus zwei rechteckförmigen, gleichgroßen Kissenwänden 38, 40 aufgebaut, das Leckdichtkissen ist im leicht gefüllten, nicht aber im stark aufgeblasenen Zustand entsprechend den Figuren 2 und 4 gezeigt.

Das Ausführungsbeispiel nach Figur 5 entspricht im wesentlichen der Ausbildung nach den Figuren 3 und 4, jedoch ist nicht ein Dichtvorsprung aus Vollmaterial vorgesehen, sondern wird der Dichtvorsprung 42 durch zwei ringförmig umlaufende und mit der leckseitigen Kissenwand 40 dicht verbundene Dichtlippen, die die Bezugsziffer 42 tragen, gebildet. Vorgesehen ist eine ringförmige, innere Dichtlippe, die leicht nach innen geneigt ausgebildet ist und mit ihrer Innenfläche die Mulde 36 zusammen mit dem zentralen Verbidungsbereich beider Kissenwände 38, 40 begrenzt. Die außenseitige Dichtlippe ist ebenfalls ringförmig, sie läuft am Außenrand des schlauchförmigen Innenraums 30 und ist nach außen geneigt. Durch die beiden Dichtlippen, die den Dichtvorsprung 42 bilden, wird bei Auflage auf eine abzudichtende Wand ein Ringraum begrenzt, der auf Grund der Orientierung der Dichtlippen beim Anpressen gegen die schadhafte Wand nach außen hin Luft abgeben kann. Dadurch finden ein Ansaugen an die abzudichtende Wand statt. Wie im Ausführungsbeispiel nach den Figuren 3 und 4 sind die beiden Kissenwände 38, 40 armiert, die Dichtlippen des Dichtvorsprungs 42 sind aus steifem, unarmiertem Gummimaterial. Auch das Leckdichtkissen nach diesem Ausführungsbeispiel kann in einem einzigen Arbeitsschritt aus geeignetem Zuschnitt bzw. vorbereiteten Dichtleisten durch Heißvulkanisation hergestellt werden.

Der Durchlaß 26 ist vorzugsweise in einem Eckbereich, aber wie im Ausführungsbeispiel nach Fig. 3 parallel zu der kürzeren Rechteckseite verlaufend, angeordnet. Es muß dafür Sorge getragen werden, daß sich zwischen dem Durchlaß 26 und der Wand des schadhaften Behälters oder Rohres ausreichend Material befindet, um an dieser Stelle eine sichere Abdichtung zu erzielen, denn durch den Durchlaß 26 wird beispielsweise die Dichtlippe im Ausführungsbeispiel gemäß den Figuren 3 und 4 lokal ausgesteift und ist nicht mehr so nachgiebig wie an anderen Stellen. Demgemäß wird der Durchlaß 26, wie Fig. 3 zeigt, möglichst in der Ebene der Gegenplatte 20, also in größtmöglicher Entfernung von der Auflagefläche des Leckdichtkissens an der schadhaften Wand, angeodnet. Im Ausführungsbeispiel nach den Figuren 1 und 2 bietet es sich an, den Durchlaß zwischen dem Mantel des Innenraums 30 und der flexiblen Gegenplatte 20 anzuordnen.

Als vorteilhaft hat es sich auch erwiesen, mehrere Durchlässe vorzusehen, beispielsweise in angrenzenden oder diagonal gegenüberliegenden Eckbereichen, und diese außenseitig über einen Schlauch mittels eines Y-Stücks miteinander zu verbinden. Hierdurch wird erreicht, daß der Innenraum 30 praktisch vollständig entleert werden kann.

## Patentansprüche

1. Vorrichtung zum Abdichten schadhafter, eine Leckstelle aufweisender Wände von Behältern oder Rohren mit einem die Leckstelle überdeckenden, aufblasbaren Leckdichtkissen, das eine flexible Gegenplatte (20), die an gegenüberliegenden Randbereichen Befestigungsteile (24) für eine den Behälter bzw. das Rohr umgreifende Spanneinrichtung hat und einen an der leckzugewandten Seite dieser flexiblen Gegenplatte befindlichen und mit ihr verbundenen, aufblasbaren Innenraum (30) aufweist, der über einen Nippel (34) von außen zugänglich ist und von mindestens einer Wand (38, 40) aus einem gummiartigen, armierten Material begrenzt wird,
**dadurch gekennzeichnet,** daß der Innenraum (30) ringförmig ausgebildet ist und zusammen mit der flexiblen Gegenplatte (20) eine das Leck aufnehmende Mulde (36) begrenzt und daß ein Durchlaß (26) vorgesehen ist, der den Innenraum (30) dieser Mulde (36) mit der Außenseite des Leckdichtkissens verbindet.

2. Vorrichtung nach Anspruch 1, dadurch gekennzeichnet, daß die flexible Gegenplatte (20) und der Innenraum (30) von einer leckseitigen Kissenwand (40) und einer leckabgewandten Kissenwand (38) gebildet werden, die jeweils aus armiertem, bandförmigem, gummiartigem Material gefertigt sind und so randseitig sowie im Bereich der Mulde (36) miteinander verbunden sind, daß zwischen der randseitigen Verbindung und dem Bereich der Mulde (36) der ringförmig umlaufende Innenraum (30) ausgebildet wird.

3. Vorrichtung nach Anspruch 1, dadurch gekennzeichnet, daß der Innenraum (30) durch einen aufblasbaren Ringmantel begrenzt wird, der mit der Gegenplatte (20) unter Abdichtung verbunden ist.

4. Vorrichtung nach einem der Ansprüche 1 bis 3, dadurch gekennzeichnet, daß an der leckzugewandten Seite des Mantels des ringförmigen Innenraums (30) ein Dichtvorsprung (42) ringförmig umlaufend quer zur Wand (40) wegsteht.

5. Vorrichtung nach Anspruch 4, dadurch gekennzeichnet, daß der Dichtvorsprung (42) die Form eines Rechteckrahmens hat, und daß der Durchlaß (26) durch eine Wand dieses rahmenförmigen Dichtvorsprungs (42) ragt.

6. Vorrichtung nach Anspruch 4, dadurch gekennzeichnet, daß der Dichtvorsprung (42) mindestens eine auf der leckseitigen Kissenwand (40) im Bereich des Innenraums (30) quer abstehende Dichtlippe aufweist.

7. Vorrichtung nach einem der Ansprüche 4 bis 6, dadurch gekennzeichnet, daß der Dichtvorsprung (42) eine Rinne ausbildet, die zusammen mit der Wand des abzudichtenden Behälters oder Rohres einen Ringraum begrenzt.

8. Vorrichtung nach einem der Ansprüche 1 bis 7, dadurch gekennzeichnet, daß der Durchlaß (26) parallel zur Gegenplatte (20) verläuft.

9. Vorrichtung nach einem der Ansprüche 1 bis 8, dadurch gekennzeichnet, daß das Leckdichtkissen aus in einer Presse heiß vulkanisiertem, armiertem, bahnförmigem, vor dem Vulkanisieren unvulkanisiertem Gummimaterial in einem einzigen Produktsschritt hergestellt ist oder aus entsprechenden Zuschnitten aus armierten, gummiähnlichen Material durch Verkleben aufgebaut ist.

10. Vorrichtung nach einem der Ansprüche 1 bis 9, dadurch gekennzeichnet, daß sich der Durchlaß (26) vorzugsweise in Nähe eines Eckbereichs und insbesondere an einer Stelle befindet, wo zwischen dem Durchlaß und der Wand des abzudichtenden Behälters oder Rohres ausreichend Material für die Abdichtung in diesem Bereich verbleibt.

## Claims

1. A device for sealing damaged leaking walls of containers or tubes said device having an inflatable cushion that covers the site of the leak; a flexible counter plate (20) that is provided on opposite edge regions with fastening elements for a clamping device surrounding the container or the tube; and an inflatable inner ring (30) on the side of the said flexible counter plate facing the leak and assembled with the said counter plate, said ring being accessible from the outside through a nipple (34) and limited by at least one wall (38, 40) made of a rubber-like reinforced material; characterized in that said inner ring (30) is annular and delimits with said flexible counter plate (20) a trough (36) that covers the leak; and in that a passage (26) is provided connecting said inner ring (30) of said trough (36) with the outside of said sealing device.

2. The device as set forth in claim 1, characterized in that the flexible counter plate (20) and the inner ring (30) is formed by a side (40) of the cushion that faces the leak and a side (38) of the cushion that faces away from the leak, these sides (38, 40) of the cushion being constructed of reinforced, flat, rubber-like material and linked along their edges as well as in the region of the trough (36) so that the annular inner ring (30) is formed between the union along the edges and the region of the trough.

3. The device as set forth in claim 1, characterized in that the inner ring (30) is delimited by an inflatable annular jacket that is connected with the counter plate (20) and that effects sealing.

4. The device as set forth in one of the claims 1 to 3, characterized in that on the side of the jacket of the annular inner ring (30) that faces the leak, a sealing protrusion (42) is mounted that is circular in shape and that is mounted at an angle to the wall (40).

5. The device as set forth in claim 4, characterized in that the sealing protrusion (42) has the shape of a rectangular frame, and that the passage (26) protrudes through a wall of the frame-shaped sealing protrusion

6. The device as set forth in claim 4, characterized in that the sealing protrusion (42) reveals, in the vicinity of the inner ring (30), at least one diagonally mounted sealing lip on the side (40) of the cushion that faces the leak.

7. The device as set forth in one of the claims 4 to 6, characterized in that the sealing protrusion (42) forms a gutter which, in conjunction with the container wall or tube wall to be sealed defines an annular space.

8. The device as set forth in one of the claims 1 to 7, characterized in that said passage (26) runs parallel to said counter plate (20).

9. The device as set forth in one of the claims 1 to 8, characterized in that the cushion for sealing leaks is manufactured in a press under heat vulcanization, in one production process, from rubber material that is reinforced and flat, but that before the vulcanization process was not vulcanized, or it is built up through glueing from sections that had been prepared accordingly from reinforced, rubber-like material.

10. The device as set forth in one of the claims 1 to 9, characterized in that said passage (26) is preferably located in the vicinity of a corner region and especially at a spot that allows ample space between the passage and the wall of the container or tube to effect sealing in this region.

## Revendications

1. Dispositif pour l'étanchement de parois endommagées de récipients ou de tubes, présentant une fuite, par l'intermédiaire d'un coussinet d'étanchéité contre les fuites, gonflable, recouvrant l'endroit de la fuite, qui comporte une contre-plaque flexible (20), comprenant, aux zones marginales opposées, des pièces de fixation (24) pour un dispositif de serrage enveloppant le récipient ou le tube, et une chambre interne (30) gonflable, se trouvant sur la face orientée vers la fuite de cette plaque flexible et reliée à celle-ci, cette chambre étant accessible de l'extérieur par une nipple (34) et étant délimitée par au moins une paroi (38, 40) en matière armée, du type caoutchouc, caractérisé en ce que la chambre interne (30) est conçue de forme annulaire et délimite, conjointement avec la contre-plaque flexible (20), une cavité (36) recevant la fuite, et en ce qu'un passage (26) est prévu, qui relie la chambre interne (30) de cette cavité (36) avec la face externe du coussinet d'étanchéité contre les fuites.

2. Dispositif selon la revendication 1, caractérisé en ce que la contre-plaque flexible (20) et la chambre interne (30) sont formées par une paroi (40) de coussinet tournée vers la fuite et d'une paroi (38) de coussinet détournée de la fuite. qui sont fabriquées, chacune, à partir d'une matière armée, du type caoutchouc, en forme de bandes et qui sont reliées entre elles aux bords ainsi que dans la zone de la cavité (36) de manière à former, entre la liaison marginale et la zone de la cavité (36), la chambre interne (30) qui présente une périphérie annulaire.

3. Dispositif selon la revendication 1, caractérisé en ce que la chambre interne (30) est délimitée par une enveloppe annulaire gonflable, qui est reliée, de manière étanche, à la contre-plaque (20).

4. Dispositif selon l'une des revendications 1 à 3, caractérisé en ce que sur la face tournée vers la fuite de l'enveloppe de la chambre interne de forme annulaire (30), une saillie d'étanchéité (42) s'écarte transversalement par rapport à la paroi (40) en faisant le tour sous forme annulaire.

5. Dispositif selon la revendication 4, caractérisé en ce que la saillie d'étanchéité (42) présente la forme d'un cadre rectangulaire, et en ce que le passage (26) dépasse par une paroi de cette saillie d'étanchéité (42) en forme de cadre.

6. Dispositif selon la revendication 4, caractérisé en ce que la saillie d'étanchéité (42) présente au moins une lèvre d'étanchéité faisant saillie transversalement dans la zone de la chambre interne (30) sur la paroi (40) de coussinet tournée vers la fuite.

7. Dispositif selon l'une des revendications 4 à 6, caractérisé en ce que la saillie d'étanchéité (42) forme une rigole qui délimite, conjointement avec la paroi du récipient ou du tube à rendre étanche, une chambre annulaire.

8. Dispositif selon l'une des revendications 1 à 7, caractérisé en ce que le passage (26) s'étend parallèlement à la contre-plaque (20).

9. Dispositif selon l'une des revendications 1 à 8, caractérisé en ce que le coussinet d'étanchéité contre les fuites est fabriqué, en une seule étape de fabrication, dans une matière en caoutchouc, armée, en forme de bandes, non vulcanisée avant la vulcanisation, vulcanisée à chaud dans une presse ou est assemblé par collage à partir de pièces découpées correspondantes dans une matière armée du type caoutchouc.

10. Dispositif selon l'une des revendications 1 à 9, caractérisé en ce que le passage (26) se trouve, de préférence, à proximité d'une zone d'angle et en particulier à un endroit où entre le passage et la paroi du récipient ou du tube à rendre étanche, il reste assez de matière pour l'étanchement dans cette zone.
